(19)

Europäisches
Patentamt
European
Patent Office
Office européen
des brevets

(11) **EP 4 310 552 A1**

(12) **EUROPEAN PATENT APPLICATION**

(43) Date of publication:
**24.01.2024 Bulletin 2024/04**

(21) Application number: **23183683.4**

(22) Date of filing: **05.07.2023**

(51) International Patent Classification (IPC):
**$G01S\ 19/22^{(2010.01)}$**    **$G01S\ 19/37^{(2010.01)}$**

(52) Cooperative Patent Classification (CPC):
**G01S 19/22; G01S 19/37;** G01S 19/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.07.2022 US 202217868542**

(71) Applicant: Honeywell International Inc.
**Charlotte, NC 28202 (US)**

(72) Inventors:
• **MIN, Yanling**
  **Charlotte 28202 (US)**
• **SCHIPPER, Brian**
  **Charlotte 28202 (US)**
• **CAO, Xiao**
  **Charlotte 28202 (US)**

(74) Representative: **Haseltine Lake Kempner LLP
Cheapside House
138 Cheapside
London EC2V 6BJ (GB)**

(54) **STATIC SESSION MULTIPATH DETECTION**

(57)    Systems and methods for static session multipath detection are described herein. In certain embodiments, a system includes one or more global navigation satellite system (GNSS) receivers configured to receive GNSS signals from multiple GNSS satellites, wherein the GNSS receiver provides GNSS measurements. The system also includes one or more processors configured to receive the GNSS measurements. The one or more processors execute computer-readable instructions that cause the one or more processors to calculate code minus carrier (CMC) measurements for the measurements associated with each satellite; remove trends in the CMC measurements to create detrended CMC measurements; transform the detrended CMC measurements into transformed CMC measurements, wherein the transformed CMC measurements are in the frequency domain; identify multipath amplitude in a multipath frequency window; and determine if a GNSS signal is subject to multipath based on a comparison of the identified multipath amplitude against a code noise amplitude.

FIG. 2

EP 4 310 552 A1

**Description**

BACKGROUND

In some systems, a receiver may receive a signal transmitted from a single transmission and a single source. When multiple instances of this signal are received by a receiver along multiple paths, the received signals are said to be subject to multipath effects. These multipath effects can cause multipath errors that negatively affect the ability to accurately receive the information encoded in the received signal. For example, an antenna for a global navigation satellite system (GNSS) receiver may receive a signal from a GNSS satellite along multiple paths. As designed, the antenna receives the GNSS signal along a line-of-sight path. However, the antenna may also receive the GNSS signal after being reflected one or more times. The reflections can be caused by water, mirrors, buildings, grounds, or other objects capable of reflecting a GNSS signal.

The effects of these signals received along multiple paths are a major source of errors for GNSS carrier phase and code measurements. The errors in the carrier phase and code measurements can degrade the accuracy of calculated positions. As the code and carrier phase measurements are used in GNSS positioning algorithms, multipath errors can degrade positioning accuracy.

SUMMARY

Systems and methods for static session multipath detection are described herein. In certain embodiments, a system includes one or more global navigation satellite system (GNSS) receivers configured to receive GNSS signals from multiple GNSS satellites, wherein the GNSS receiver provides GNSS measurements. The system also includes one or more processors configured to receive the GNSS measurements. The one or more processors execute computer-readable instructions that cause the one or more processors to calculate code minus carrier (CMC) measurements for the measurements associated with each satellite in the multiple GNSS satellites; remove trends in the CMC measurements to create detrended CMC measurements; transform the detrended CMC measurements into transformed CMC measurements, wherein the transformed CMC measurements are in the frequency domain; identify multipath amplitude in a multipath frequency window; and determine if a GNSS signal is subject to multipath based on a similarity of the identified multipath amplitude against a code noise amplitude.

BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:

FIG. 1 is a drawing illustrating an object receiving signals affected by multipath effects;

FIG. 2 is a block diagram of a system for detecting multipath effects in a static session according to an aspect of the present disclosure;

FIG. 3 is a flowchart diagram of a method for detecting multipath effects in a static session according to an aspect of the present disclosure; and

FIGs. 4A and 4B are graphs illustrating the use of frequency windows to determine the presence of multipath effects according to an aspect of the present disclosure; and

FIG. 5 is a flowchart diagram of a method for static session multipath detection according to an aspect of the present disclosure.

Per common practice, the drawings do not show the various described features according to scale, but the drawings show the features to emphasize the relevance of the features to the example embodiments.

DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

This disclosure describes systems and methods for detecting the presence of multipath errors in a static session. For example, to detect multipath errors on a signal received from a GNSS satellite, a system may process the received GNSS measurements. When processing the GNSS measurements, the system calculates and collects code-minus-carrier (CMC) measurements for the satellite under analysis. When the system collects enough CMC measurements, the system detrends the collected data and transforms the data into the frequency domain. Within the frequency domain, the system compares the amplitude of the received signal within a frequency window to the noise amplitude. If the system identifies an amplitude at a frequency within the frequency window that is significantly greater than the noise amplitude, the system determines that the signal from the satellite in question is subject to multipath effects. When subject to multipath effects, the system may exclude the measurements from the particular satellite or apply a weight to the measurements that reduce the contribution of the measurements to resultant position calculations.

As stated above, multipath errors can negatively affect the accuracy of position solutions derived from GNSS measurements. Accordingly, detecting multipath errors for each satellite can help to assess the signal environment and the quality of GNSS measurements. Also, excluding or weighting satellite signals subject to large multipath errors can improve the position solution accuracy and the performance of GNSS positioning algorithms.

In some embodiments, when detecting multipath, a system, as described herein, may detect the multipath errors when the position or movement of the system is static with regards to the surrounding environment of the system. As described herein, when the position or movement of the system is static in relation to a surrounding environment, the system may be described as experiencing a static session. Accordingly, the system may detect a static session before detecting multipath errors. The system may detect a static session because, during static conditions, multipath errors are often sinusoidal and have a signature frequency of oscillation. Due to the sinusoidal nature of the multipath errors, the errors can be identified using frequency domain analysis.

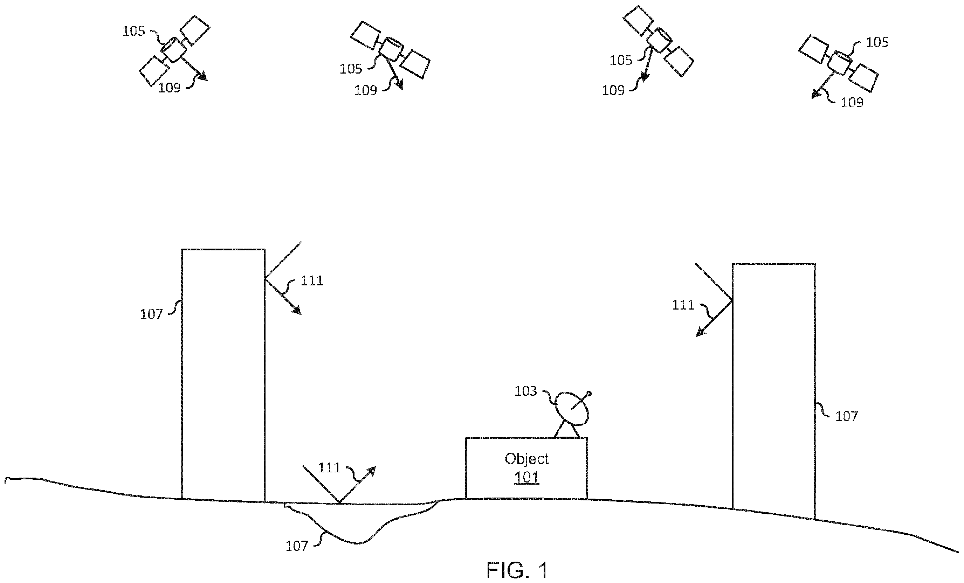

FIG. 1 is a diagram illustrating an object 101 that includes a receiver 103 that receives signals subject to multipath errors. As illustrated, the object 101 may be an object that receives signals through a receiver 103. In some implementations, the object 101 may receive signals for determining navigation solutions for the object. For example, the object 101 may be a vehicle like an aircraft, boat, automobile, and the like. Also, the object 101 may be a transportable object like a phone, computer, or other transportable object.

In some implementations, the object 101 may receive line-of-sight (LOS) GNSS signals 109 from GNSS satellites 105 through at least one receiver 103. For example, the receiver 103 may be a GNSS receiver having at least one antenna that receives satellite signals from multiple GNSS satellites 105 that are observable to at least one antenna on the receiver 103. For example, the receiver 103 receives the LOS GNSS signals 109 from the presently visible GNSS satellites 105 during operation. As used herein, the GNSS satellites 105 may be any combination of satellites that provide navigation signals. For example, the GNSS satellites 105 may be part of the global positioning system (GPS), GLONASS, Galileo system, COMPASS (BeiDou), or other satellite systems that form part of a GNSS. The GNSS satellites 105 may provide location information anywhere on the earth. The receiver 103 may provide the received LOS GNSS signals 109 to a computer onboard the object 101. The computer may extract position, velocity, and time data from the signals to acquire pseudorange measurements and calculate navigation information for the object 101.

In some operating environments, the receiver 103 may receive additional GNSS signals other than the LOS GNSS signals 109. Typically, these GNSS signals are the same signals transmitted from the GNSS satellites 105. However, these additional GNSS signals propagated along different paths other than direct line-of-sight before being received by the receiver 103. For example, the LOS GNSS signals 109 may reflect off of one or more reflective objects 107 towards the receiver 103 on the object 101. The one or more reflective objects 107 may include buildings, lakes, other vehicles, mirrors, or other potentially reflective objects. As these reflected signals travel along multiple paths, the receiver 103 receives the reflected signals as multipath signals. As these signals are received at different times than the corresponding LOS GNSS signals 109 and GNSS measurements are dependent on the time received, the different reception times can cause multipath errors in the resultant position calculations.

Multipath errors are an important error source in GNSS measurements, regardless of the carrier phase measurements or code measurements. Methods for detecting the existence of multipath errors can help assess the environment around a GNSS receiver 103. If a system determines that some of the signals associated with the GNSS satellites 105 are negatively affected by multipath errors, the system can decide whether to exclude measurements from affected satellites 105 or apply weights to the measurements produced from signals from the affected satellites 105 that reduce the contribution of the affected satellite signal to calculations performed by a GNSS positioning algorithm. Thus, identifying the multipath errors can help improve the accuracy of the positions calculated by the GNSS positioning algorithm.

When determining whether a received GNSS signal is affected by multipath, systems commonly calculate code-minus-carrier (CMC) measurements to analyze multipath errors. The CMC for a satellite signal is calculated according to the following equation:

$$CMC_{i,k} = \rho_{i,k} - \phi_{i,k} = 2I_{i,k} + N_{i,k}\lambda_{i,k} + MP_{i,k} - mp_{i,k} + \varepsilon_{i,k} - \zeta_{i,k}.$$

As shown, i refers to the signal frequency and k is the measurement epoch. The CMC measurement, at a particular frequency and epoch, is equal to the difference between the code measurement ($\rho_{i,k}$) and the carrier phase measurement ($\phi_{i,k}$), where the CMC measurement equals a combination of the ionospheric delay ($I_{i,k}$), integer ambiguity ($N_{i,k}$), wavelength of the GNSS signal ($\lambda_{i,k}$), code multipath ($MP_{i,k}$) and code noise ($mp_{i,k}$), and carrier phase multipath ($\varepsilon_{i,k}$) and carrier phase noise ($\zeta_{i,k}$).

When attempting to identify the multipath error from the CMC measurements, the carrier phase multipath and carrier phase noise are generally ignored because the contribution of the carrier phase multipath and the carrier phase noise to the CMC measurement is substantially smaller than the contribution of the code multipath and code noise, such that the contribution of the carrier phase multipath and the carrier phase noise is negligible. Thus, the above equation can be simplified as follows:

$$CMC_{i,k} = \rho_{i,k} - \phi_{i,k} = 2I_{i,k} + N_{i,k}\lambda_{i,k} + MP_{i,k} + \varepsilon_{i,k}.$$

From this equation, several methods exist for attempting to isolate the code multipath from the ionospheric delay, the integer ambiguity, the wavelength, and the code noise. As used herein, the ionospheric delay generally refers to the delay caused by the atmosphere as a GNSS signal propagates from the transmitting satellite 105 towards the receiver 103. Also, the integer ambiguity generally refers to the ambiguity in the number of cycles in a signal along the path between the satellite 105 and the receiver 103. The wavelength may generally refer to the wavelength of the LOS GNSS signals 109. Further, the code noise may refer to random noise on the true LOS GNSS signal 109.

Typical methods for identifying multipath do so by removing the contribution of the ionospheric delay, carrier phase integer ambiguity, and wavelength from the CMC measurement to isolate the code multipath and the code noise. The ionospheric delay changes much slower than the code multipath, and (in the absence of cycle slips) the ambiguity and wavelength remain constant. Thus, multiple methods can isolate the code multipath and code noise from the ionospheric delay, carrier phase integer ambiguity, and wavelength.

In one example of a typical method, a specific time window is analyzed to calculate the average value of CMC measurements within the time window. As the code noise and code multipath change much quicker than the other contributors to the CMC measurements, the average value corresponds to the contribution of the ionospheric delay, carrier phase integer ambiguity, and wavelength. These typical systems may subtract the average value from the CMC measurement to isolate the contribution of the code multipath and code noise. However, if the code noise is relatively large, it is difficult to positively identify the remaining portion of the CMC measurement as being the code multipath error.

In another exemplary typical method, a typical system may calculate CMC measurements for consecutive epochs and find the difference between the CMC measurements. For example, the typical system identifies the current CMC measurement and subtracts the previous CMC. As the ambiguity, wavelength, and ionospheric delay is almost constant between consecutive epochs, the difference between consecutive CMC values represents the contribution of the code multipath and code noise to the CMC measurement. However, in a static scenario, in consecutive epochs, calculating the difference between the CMC measurements also yields the difference between the code multipath, but as the noise is random, calculating the difference may amplify the noise. Thus, in a static scenario, subtracting consecutive CMC measurements reduces the contribution of the code multipath while increasing the contribution of the code noise, which increases the difficulty of identifying the code multipath.

In a further exemplary typical method, a typical system uses a bandpass filter to filter out the frequencies associated with multipath errors. However, code noise is white noise and, accordingly, has components at every frequency. Thus, using a bandpass filter to remove the multipath also removes some frequency components of the code noise. The signal with the filtered out multipath can be compared against the original signal to determine the multipath magnitude. However, when the code noise is large, the portion of the signal at the frequencies associated with the multipath may be mostly code noise. Thus, this typical system might determine that the multipath error is large due to high code noise.

Accordingly, to identify the multipath, the object 101 may include systems that implement methods for detecting the presence of multipath errors during static sessions by analyzing the frequency spectrum of the CMC measurements to avoid the disadvantages of the aforementioned typical methods.

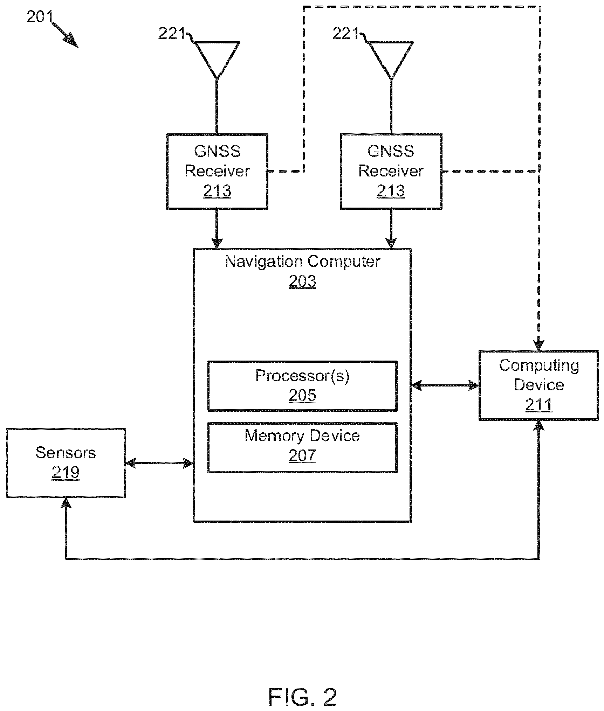

FIG. 2 is a block diagram of an exemplary system 201 that is able to detect multipath effects in GNSS signals using CMC measurements. As shown, the system 201 includes one or more GNSS receivers 213. The GNSS receivers 213 receive GNSS signals from the visible GNSS satellites through one or more antennas 221. The one or more GNSS receivers 213 may be a single receiver, such as a multi-mode receiver, or separate receivers associated with different frequencies transmitted by GNSS satellites. As described above in connection with the receiver 103 in FIG. 1, the signals received by the one or more GNSS receivers 213 may include multipath signal components in addition to the LOS GNSS signal components. In some implementations, the one or more GNSS receivers 213 calculate GNSS measurements from the received GNSS signals and provide the calculated GNSS measurements to other components within the exemplary system 201. Alternatively, the one or more GNSS receivers 213 may provide the received GNSS signals to other components for processing.

In exemplary embodiments, the exemplary system 201 may include a navigation computer 203. The navigation computer 203 is coupled to the one or more GNSS receivers 213. Accordingly, the one or more GNSS receivers 213 provide either the received signals or GNSS measurements to the navigation computer 203 for additional processing. When the navigation computer 203 receives the GNSS signals, the navigation computer 203 may calculate the GNSS measurements typically calculated using GNSS measurements. With the GNSS measurements, the navigation computer 203 may calculate CMC measurements for the GNSS signals received through the different GNSS receivers 213.

In some embodiments, the navigation computer 203 includes one or more processors 205 and at least one memory device 207. The one or more processors 205 process the information from the one or more GNSS receivers 213 to determine whether or not a particular GNSS signal is affected by multipath signals. Alternatively, the navigation computer 203 may provide the information from the one or more GNSS receivers 213 to an additional computing device 211, where the computing device 211 processes the information from the one or more GNSS receivers 213 to determine whether or not a particular GNSS signal is affected by multipath signals. Further, the one or more GNSS receivers 213 may provide GNSS information directly to the additional computing device 211. While the system 201 is shown as having an additional computing device 211, the additional computing device 211 is optional. However, within this specification, where information is described as being processed or tasks executed by the navigation computer 203 or the one or more processors 205, the information can also be processed or the tasks executed in an alternative system by the additional computing device 211.

In exemplary embodiments, the system 201 may include one or more additional sensors 219. As used herein, the additional sensors 219 refer to devices that are able to produce electrical signals containing information that describes the environment of an object having the sensors located thereon, or the relationship of the object to the environment. For example, one or more additional sensors 219 may include inertial sensors, barometers, altimeters, velocimeters, magnetometers, odometers, ranging devices, and the like. The one or more additional sensors 219 may provide signals carrying information to the navigation computer 203. Alternatively, the one or more additional sensors 219 may provide signals to the additional computing device 211. In some embodiments, the one or more additional sensors 219 may also receive control signals and other types of information from one or both of the navigation computer 203 and the one or more additional sensors 219.

In some embodiments, the one or more processors 205 may execute instructions that cause the one or more processors 205 to determine whether the object 101 containing the system 201 is in a static session based on information from the one or more additional sensors 219. As mentioned above, a static session refers to a state of the object 101, where the object 101 is not moving in relation to the surrounding environment. The one or more processors 205 may identify a static session when the information provided by the one or more GNSS receivers 213 or the one or more additional sensors 219 indicate that the object 101 is not moving in relation to the surrounding environment. For example, where the one or more additional sensors 219 are inertial sensors, the one or more processors 205 may determine that signals provided by the inertial sensors indicate that the system 201 is not experiencing rotation or acceleration. Alternatively, where the one or more additional sensors 219 are vision sensors, the one or more processors 205 may determine that signals provided by the vision sensors indicate that the system 201 is not moving with respect to the surrounding environment. In some implementations, the one or more processors 205 may determine that the object 101 is in a static session based on the signals received from the one or more GNSS receivers 213.

When the object 101 is in a static session, the multipath component of the GNSS signal received by the one or more GNSS receivers 213 may be sinusoidal. Accordingly, a received GNSS signal can be analyzed in the frequency domain to identify the frequency components associated with any existing multipath signals. Thus, the system 201 may transform acquired information into the frequency domain for additional analysis.

In certain embodiments, the one or more processors 205 may store calculated CMC measurements on the memory device 207 for each of the satellites in communication with the system 201. For example, as the one or more processors 205 receive CMC measurements from the one or more GNSS receivers 213 or calculate CMC measurements based on the received signals from the one or more GNSS receivers 213, the one or more processors 205 may store the CMC measurements in the at least one memory device 207.

In additional embodiments, the one or more processors 205 remove trends (detrend) the collected CMC measurements for each GNSS satellite. Looking at the simplified CMC equation provided above, the measurements are primarily based on an ambiguity item ($N_{i,k}\lambda_{i,k}$), the ionospheric delay ($2I_{i,k}$), the code multipath ($MP_{i,k}$), and the code noise ($\varepsilon_{i,k}$). When there is no cycle slip, the ambiguity item is a constant. Also, changes in the ionospheric delay are primarily caused by elevation changes of the GNSS satellites, in which elevation slowly changes, even more so in relation to the one or more GNSS receivers 213 during a static session. Accordingly, removing linear or polynomial trends in the collected CMC measurements can remove the contribution of the ambiguity and most of the contribution of the ionospheric delay from the CMC measurements. The remaining portion of the ionospheric delay typically has a smaller frequency than the multipath.

However, if a cycle slip occurs, the CMC measurements experience a step due to the change in the ambiguity. To reduce the chance of a cycle slip preventing the identification of multipath, the one or more processors 205 may select a group of measurements collected within a small time window. Using CMC measurements from a small time window may reduce the chance of subsequent analysis of the measurements being affected by a cycle slip. Also, by using a small time window, the one or more processors 205 may analyze multiple groups of CMC measurements, each associated with a different time window. As a cycle slip may occur in one time window, it is unlikely that a cycle slip occurs in multiple consecutive time windows.

In certain embodiments, the one or more processors 205 may use a predefined time window, wherein the time window is small enough to reduce the impact of cycle slips but large enough for the one or more processors 205 to receive a sufficient number of CMC measurements. For example, the predefined time window may be a duration of time over which the one or more processors 205 would collect a sufficient number of CMC measurements for each satellite under analysis. Alternatively, the predefined time window may be defined as a number of CMC measurements.

In some embodiments, to determine the length of the time window, an analysis is performed based on the expected frequency window for potential multipath. For example, the frequency of the multipath error is proportional to the distance between a surface that reflects the GNSS signal and the receiver. As the one or more processors 205 transform the collected CMC measurements into the frequency domain, the predefined time window allows for a sufficient number of samples for the transform to provide sufficient information to identify the multipath within an expected frequency range for the multipath. For example, when the one or more processors 205 perform a fast Fourier transform (FFT) or other transform, the number of samples is dependent on the frequency window of the multipath and the sampling rate of the CMC measurements. If the sample rate of the CMC measurements is 1 Hz and an expected frequency window of the multipath is set to 0.004 Hz-0.05 Hz, a sample size of 1024 CMC measurements may be sufficient for multipath detection with a frequency resolution equal to 0.001 Hz (1 Hz/1024≈0.001 Hz). Larger sample sizes yield an increased frequency resolution but also increase the chance of cycle slips affecting associated calculations.

In further embodiments, when the one or more processors 205 have collected a sufficient number of samples, the one or more processors 205 transform the collected samples into the frequency domain. As mentioned above, the one or more processors 205 may perform an FFT or other transform that transforms the collected measurements into the frequency domain.

In certain embodiments, when the one or more processors 205 have transformed the collected samples into the frequency domain, the one or more processors 205 analyze the amplitudes of the signal at the different frequencies to determine whether a signal is affected by multipath. When identifying the multipath, the one or more processors 205 identify one or more frequencies within a predefined frequency window by comparing the amplitudes of frequencies within the predefined frequency window against the noise of the signal at frequencies outside the predefined frequency window.

To identify a frequency within the predefined frequency window as being multipath, the one or more processors 205 apply a predefined frequency window to the transformed CMC measurements. The one or more processors 205 then distinguish between the frequencies within the predefined frequency window and the frequencies outside the predefined frequency window. The predefined frequency window is calculated external to the system 201, based on empirical observations of multipath signals. The predefined frequency window can be stored on the at least one memory device 207. The one or more processors 205 then apply the stored frequency window to the transformed CMC measurements.

In some implementations, the one or more processors 205 calculate statistical information for the transformed CMC measurements found outside of the frequency window. For example, the one or more processors 205 calculate the average value and standard deviation for the CMC measurements found outside of the predefined frequency window. As the code noise is white noise, a portion of the code noise can be found at substantially all of the frequencies represented within the transformed CMC measurements. Thus, by identifying the average and standard deviation for the samples outside of the frequency window, the one or more processors 205 are able to statistically characterize the contribution of the code noise to the transformed CMC measurements. In an alternative implementation, the one or more processors 205 may calculate an average and standard deviation for all the transformed CMC measurements under analysis.

In exemplary embodiments, the one or more processors 205 identify one or more frequencies within the frequency window that have the largest amplitude. For example, the one or more processors 205 may identify a frequency of the CMC measurements associated with the greatest amplitude within the frequency window. Additionally, the one or more processors 205 may identify other frequencies that have a signal amplitude with a similar magnitude to the largest amplitude within the frequency window. For example, the one or more processors 205 may identify frequencies with amplitudes within a certain percentage of the largest amplitude. Alternatively, the one or more processors 205 may first determine whether the greatest amplitude is multipath before attempting to identify other potential frequencies associated with multipath frequencies.

In further embodiments, when the one or more processors 205 have identified the greatest amplitude for a frequency within the frequency window and the statistical information for the code noise, the one or more processors 205 may then determine whether the greatest amplitude is associated with a multipath signal by comparing the amplitude against the average value of the code noise. When comparing the greatest amplitude against the average value, the one or more processors 205 may calculate a multipath amplitude difference. The one or more processors 205 calculate the multipath amplitude difference by finding the difference between the largest amplitude in the frequency window and the average value of the code noise.

In some embodiments, when the one or more processors 205 has calculated the multipath amplitude difference, the one or more processors 205 may then compare the multipath amplitude difference against the standard deviation and verify if the multipath amplitude difference is greater than a multipath threshold value. The multipath threshold value is a comparison value formed by applying a multiplicative factor to the standard deviation for the code noise. If the multipath amplitude difference is greater than the multipath threshold value, the one or more processors 205 may determine that the GNSS signal received for a particular satellite is affected by multipath. For example, when the multiplicative factor is six, if the multipath amplitude difference exceeds the multipath threshold value, the difference between the largest amplitude and the average value is greater than six standard deviations. In some implementations, if the largest amplitude is six standard deviations of the code noise greater than the average value of the code noise, then the one or more processors 205 may determine that the large amplitude is unlikely due to code noise and determine that the amplitude is due to multipath effects on the GNSS signal. While the multiplicative factor has been described as being six, other number values can be used based on the operative requirements for the system 201. For example, if the operation of a system requires greater certainty that a particular signal is not affected by multipath, the system can use a lower multiplicative factor. Alternatively, other operational requirements may call for a higher multiplicative factor.

In additional embodiments, when the one or more processors 205 determine that the signal is affected by multipath, the one or more processors 205 may attempt to determine whether other frequencies are associated with multipath signals. For example, the one or more processors 205 may then identify whether other frequencies in the frequency window have amplitudes that also produce a multipath amplitude difference that exceeds the multipath threshold value. In a further embodiment, the one or more processors 205 may attempt to identify other frequency components that are outside the frequency window that also have multipath threshold values that exceed the multipath threshold value. If the one or more processors 205 identify frequency components outside the frequency window having multipath amplitude differences that exceed the multipath threshold value, the one or more processors 205 may determine that the signal is affected by multipath. Additionally, the one or more processors 205 may adjust the range of the frequency window based on the frequency of the identified multipath that is outside the frequency window for attempting to determine whether future signals are affected by multipath. A multipath signal may have a frequency outside the frequency window when the GNSS signal is reflected from a reflective surface that is far away from the one or more GNSS receivers 213.

In certain embodiments, when the one or more processors 205 have determined that a GNSS signal is subject to multipath, the one or more processors 205 may then alter the calculations based on measurements from the GNSS signal to take account of the multipath effects. For example, the one or more processors 205 may alter the calculations by excluding measurements based on the affected GNSS signal from subsequent calculations. Alternatively, the one or more processors 205 may alter the calculations by applying a weight that reduces the contribution of the affected GNSS signal to other calculations (like calculations in a positioning algorithm) that use measurements from the affected GNSS signal, other GNSS signals, and the one or more additional sensors 219. When applying weights, the one or more processors 205 may apply a weight that is dependent on the magnitude of the multipath amplitude difference in comparison to the standard deviation. Also, the applied weights may depend on the number of frequencies associated with multipath signals. The more frequencies affected by the multipath signals may cause the one or more processors 205 to decrease the weighting factor to reduce the contribution of the affected GNSS signal to other calculations. However, if the GNSS signal is substantially affected by multiple multipath signals or a substantially large multipath signal, the one or more processors 205 may exclude the affected GNSS signal from being used for subsequent calculations. Whether to apply a weight to or exclude the affected GNSS signal may be dependent on operational requirements and preferences.

In certain embodiments, the system 201 may include one or more processors 205 and memory units, where one or more memory units store instructions that direct the one or more processors 205 to analyze GNSS signals to determine whether a particular GNSS signal is affected by multipath. Additionally, the systems 201 may also include additional processors and memory units, such as the additional computing device 211. The one or more processors 205 may be implemented using software, firmware, hardware, or other appropriate combinations thereof. The one or more processors 205 and/or additional computing device 211 may be supplemented by, or incorporated in, specially designed application-specific integrated circuits (ASICs) or field programmable gate arrays (FPGAs). The one or more processors 205 may be a general or special purpose computer or processor or other programmable logic devices. The processor and other computing devices may also include or function with software programs, firmware, or other computer-readable instructions for carrying out various process tasks, calculations, and control functions used in the present methods and systems.

Further, computer-executable instructions (such as program modules or components) may implement the methods described in this description. The one or more processors 205 may execute the computer-executable instructions. Software, firmware, or other execution-capable devices may execute the computer-readable instructions for carrying out various process tasks, calculations, and generation of data used in the operations of the described methods. The computer-readable instructions may be stored as part of one or more appropriate computer-program products, where a computer-program product may be a set of computer-readable instructions or data structures stored on a computer-readable medium. The computer-readable medium may be a media that stores data that the processor or other computing device can access. In certain implementations, the computer-readable medium may form part of a memory unit.

Computer-readable mediums may include non-volatile memory devices. Non-volatile memory devices may include semiconductor memory devices such as random access memory (RAM), read-only memory (ROM), electrically erasable programmable ROM (EEPROM), or flash memory devices. The non-volatile memory devices may also include magnetic disks (such as internal hard disks or removable disks), optical storage devices (such as compact discs (CDs), digital versatile discs (DVDs), Blu-ray discs), or other media that can store computer-executable instructions or data structures.

As described above, the system 201 may operate on an object such as the object 101 in FIG. 1. The system 201 is able to perform methods that determine whether or not a GNSS signal is affected by multipath signals during static sessions. In particular, the system 201 may determine whether a GNSS signal is affected by multipath by collecting a sufficient number of CMC measurements over a time window, detrending the collected CMC measurements, and transforming the collected measurements into the frequency domain. In the frequency domain, the system 201 analyzes the transformed CMC measurements by comparing at least the frequency component of the GNSS signal having the largest amplitude within a frequency window with statistical characteristics of the amplitudes associated with the code noise. If the system 201 determines that the largest amplitude within the frequency is substantially larger than the average value of the code noise, the system 201 determines that the large amplitude at the frequency within the frequency window is likely caused by multipath and not by code noise and that the GNSS signal under analysis is affected by multipath signals. When the system 201 determines that a particular GNSS signal is affected by multipath effects, the system 201 may alter the use of measurements that potentially use the affected GNSS signal based on the analysis of the transformed CMC measurements. For example, the system 201 may apply a weight to measurements from the GNSS signal or exclude the GNSS signal based on the magnitude of the multipath signal(s) identified in the frequency domain. Thus, the system 201 is able to reduce the impact of multipath signals and increase the accuracy of resulting measurements.

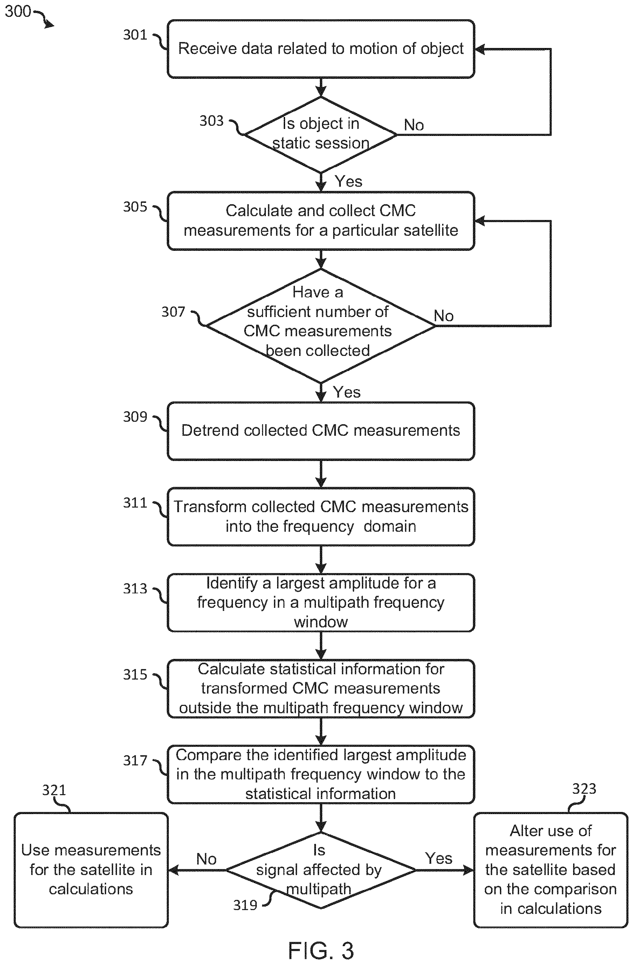

FIG. 3 is a flowchart diagram illustrating a method 300 for identifying and responding to identified multipath signals. The method 300 can be implemented by the system 201 in FIG. 2 operating on an object 101 in FIG. 1 or by other similar systems that receive and perform operations on GNSS signals. The method 300 proceeds at 301, where data related to the motion of an object is received. For example, an object 101 may have a system 201 that receives motion data through the one or more GNSS receivers 213 and the one or more additional sensors 219. With the motion data, the system 201 may calculate motion information for the object 101. The method 300 then proceeds at 303, where the system 201 determines whether the object 201 is in a static session. For example, the system 201 uses the motion data to determine whether the object 101 is in a static session. As described above, a static session occurs when the 101 is not in motion in relation to its environment. When an object 101 is in a static session, multipath signals are primarily sinusoidal. If the object 101 is not in a static session, the method 300 returns to 301 to receive additional motion data that can be used to determine if the object 101 is in a static session.

In certain embodiments, when the system 201 determines that the object 101 is in a static session, the method 300 proceeds at 305, where CMC measurements are calculated and collected for a particular satellite. As the system 201 calculates and collects CMC measurements, the method 300 proceeds at 307, where the system 201 determines whether a sufficient number of CMC measurements have been collected. For example, the system 201 may collect CMC measurements over a specified time period where the time period is long enough to collect a sufficient number of measurements, or the system 201 may count the number of CMC measurements until a sufficient number of measurements have been collected. If the system 201 has not collected a sufficient number of measurements, the system 201 returns to 305 to calculate and collect additional measurements.

In further embodiments, when the system 201 has calculated a sufficient number of measurements, the method 300 proceeds at 309, where the collected CMC measurements are detrended. For example, the system 201 may remove linear and polynomial trends from the collected CMC measurements. By removing the linear and polynomial trends from the CMC measurements, the system 201 removes the contributions of the ionospheric delay and ambiguity values to the CMC measurements. Accordingly, the detrended CMC measurements largely represent the code multipath and code noise portions of the CMC measurements. When the system 201 has detrended the CMC measurements, the method 300 proceeds at 311, where the collected CMC measurements are transformed into the frequency domain. For example, the system 201 applies an FFT to the collected CMC measurements to transform the collected CMC measurements into the frequency domain.

In additional embodiments, when the system 201 has transformed the CMC measurements into the frequency domain, the method 300 proceeds at 313, where the largest amplitude for a frequency in a multipath frequency window is identified. For example, the system 201 identifies a multipath frequency window that includes a range of frequencies in the frequency domain that is expected to contain multipath signals. Within the frequency range, the system 201 may identify the frequency having a signal component with the largest amplitude. In addition to identifying the largest amplitude, the method proceeds at 315, where statistical information is calculated for the transformed CMC measurements outside the multipath frequency window. For example, the system 201 may calculate an average value and standard deviation of the amplitudes for the frequencies outside of the frequency window.

In some embodiments, when the system 201 has calculated the statistical information and identified the largest amplitude within the frequency window, the method 300 may proceed at 317, where the identified largest amplitude in the multipath frequency window is compared to the statistical information. For example, the system 201 may calculate the difference between the largest amplitude and the average value of the amplitudes for the frequencies outside of the frequency window. The system 201 may then compare the difference against the standard deviation associated with the average value. As described above, based on the comparison, the system 201 determines whether or not the largest amplitude in the multipath frequency window is associated with a multipath signal.

In exemplary embodiments, the method 300 proceeds at 319, where the system 201 determines whether the signal is affected by multipath. For example, if the largest amplitude is statistically unlikely to be produced by code noise based on the comparison of the difference between the amplitude and the average value against the standard deviation, then the system 201 determines that the largest amplitude in the multipath frequency window was caused by a multipath signal. If the system 201 determines that the signal is not affected by multipath, then the method 300 proceeds at 321, where the satellite measurements are used in calculations. Alternatively, if the system 201 determines that the signal is affected by multipath, then the method proceeds at 323, where the use of the satellite measurements in calculations is altered based on the comparison. For example, the system 201 may exclude measurements from the satellite from being used in calculations, or the system 201 may apply a weight that reduces the contributions of the measurements in subsequent calculations. Thus, the system 201 can mitigate the effects of multipath signals in GNSS calculations.

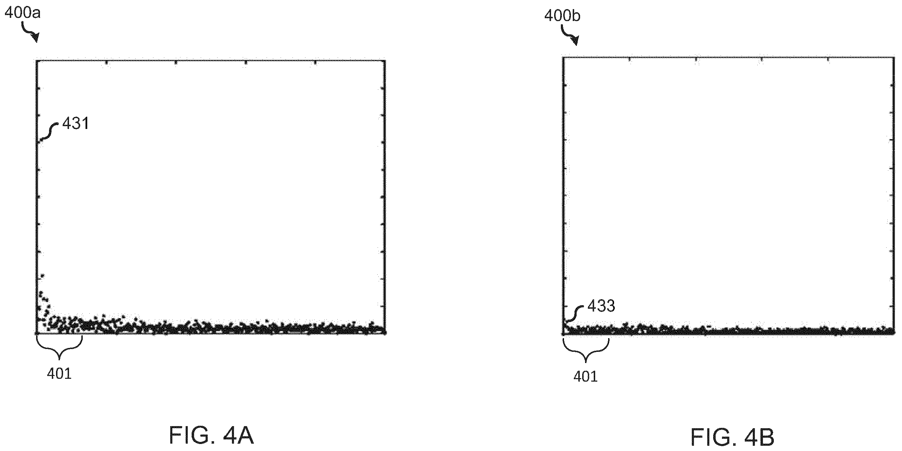

FIGs. 4A and 4B are graphs illustrating different amplitudes of signal components of detrended CMC measurements at different frequencies. FIG. 4A shows a graph 400a of a GNSS signal affected by a multipath signal, and FIG. 4B shows a graph 400b of a GNSS signal that is not affected by a multipath signal. As shown in FIG. 4A, the graph 400a has multiple signal components at various frequencies. A system (such as system 201 in FIG. 2) may identify frequencies within a multipath frequency window 401 and the amplitude of the signal components at the frequencies. As stated above, the system may identify the largest amplitude 431 of a signal component at a frequency within the multipath frequency window 401. After or before identifying the largest amplitude 431, the system may calculate the average value and standard deviation of the amplitudes for the frequencies outside of the multipath frequency window 401. The system may then compare the largest amplitude 431 to the average value and standard deviation. As shown, the largest amplitude 431 is multiple standard deviations greater than the average value such that the signal that produced the largest amplitude 431 would unlikely be attributable to code noise. Thus, the system would determine that the signal that produced the largest amplitude was a multipath signal and that the associated GNSS signal is affected by multipath signals.

Like FIG. 4A, FIG. 4B shows the graph 400b having multiple signal components at various frequencies. In a similar manner, a system may identify the largest amplitude 433 of the frequencies within the multipath frequency window. The system then calculates the average value and standard deviation of the amplitudes for the frequencies outside the multipath frequency window 401. When the system compares the largest amplitude 433 to the average value and standard deviation, the system may determine that the largest amplitude is substantially within an amplitude range that would probably be caused by code noise. Thus, the system may determine that the signal that produced the largest amplitude was noise and that the associated GNSS signal is not affected by multipath signals.

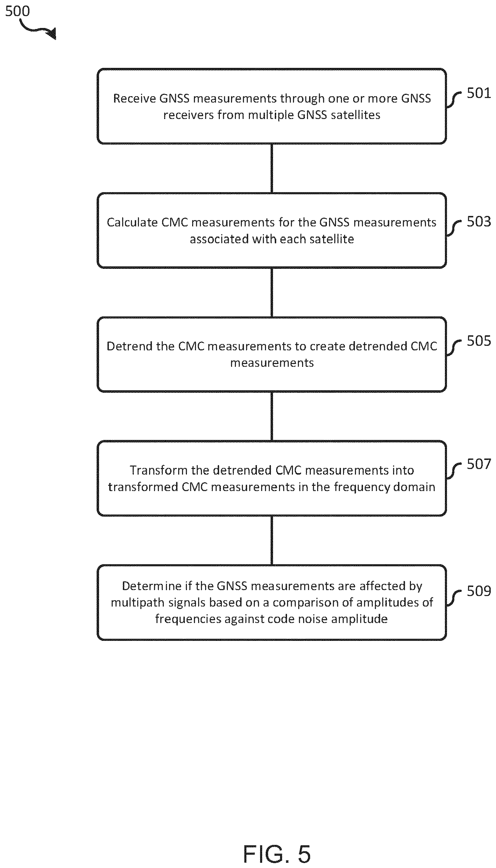

FIG. 5 depicts a flow diagram illustrating an exemplary method 500 for the static session multipath detection. The method 500 may be implemented via the techniques described with respect to FIGs 1-4B, but may be implemented using other techniques known to one having skill in the art. The blocks of the flow diagram have been arranged in a generally sequential manner to facilitate explanation. But, the arrangement of the blocks is merely exemplary, and the blocks can be arranged in any manner sufficient to provide the functionality described above with respect to FIGs. 1-4B. For example, a processor may perform steps in different orders, in parallel, or as shown.

As shown in FIG. 5, the method 500 proceeds at 501, where GNSS measurements are received through one or more GNSS receivers from multiple GNSS satellites. The method 500 proceeds at 503, where CMC measurements are calculated for the GNSS measurements associated with each satellite. For example, a processor may calculate CMC measurements for each satellite in communication with the GNSS receiver. Additionally, the processor may collect CMC measurements during a defined time duration. Further, the method 500 proceeds at 505, where the CMC measurements are detrended to create detrended CMC measurements. For example, a processor may identify linear or polynomial trends in the CMC measurements collected during a time duration. The processor may then subtract the contribution of the trends from the CMC collected CMC measurements to create the detrended CMC measurements. The detrended CMC measurements may substantially measure the code multipath and code noise contributions to the CMC measurements.

In certain embodiments, the method 500 proceeds at 507, where the detrended CMC measurements are transformed into transformed CMC measurements in the frequency domain. For example, a processor may perform an FFT on the detrended CMC measurements. Further, the method 500 proceeds at 509, where it is determined if the GNSS measurements are affected by multipath signals based on a comparison of amplitudes of frequencies against code noise amplitude. For example, a processor may apply a frequency window to the transformed CMC measurements and identify the largest amplitude of the frequencies within the frequency window. Further, the processor may calculate statistical information for the amplitudes of the transformed CMC measurements for frequencies outside the frequency window. The statistical information may include the average value and the standard deviation. The processor may then determine how many standard deviations the largest amplitude within the window is greater than the average amplitude. If the largest amplitude is substantially larger than the average amplitude, the processor may determine that the associated GNSS signals are affected by multipath signals.

*Example Embodiments*

Example 1 includes a system comprising: one or more global navigation satellite system (GNSS) receivers configured to receive GNSS signals from multiple GNSS satellites, wherein the one or more GNSS receivers provide GNSS measurements; and one or more processors configured to receive the GNSS measurements, wherein the one or more processors execute computer-readable instructions that cause the one or more processors to: calculate code minus carrier (CMC) measurements for the measurements associated with each satellite in the multiple GNSS satellites; remove trends in the CMC measurements to create detrended CMC measurements; transform the detrended CMC measurements into transformed CMC measurements, wherein the transformed CMC measurements are in the frequency domain; identify multipath amplitude in a multipath frequency window; and determine if a GNSS signal is subject to multipath based on a comparison of the identified multipath amplitude against a code noise amplitude.

Example 2 includes the system of Example 1, wherein the execution of the computer-readable instructions further cause the one or more processors to determine whether the GNSS measurements are drawn to a position of an object experiencing a static session.

Example 3 includes the system of Example 2, wherein the execution of the computer-readable instructions further cause the one or more processors to determine whether the object is experiencing the static session based on sensor measurements from one or more motion sensors.

Example 4 includes the system of any of Examples 1-3, wherein the execution of the computer-readable instructions further cause the one or more processors to determine whether a sufficient number of CMC measurements have been calculated.

Example 5 includes the system of Example 4, wherein the one or more processors determines that the sufficient number of CMC measurements have been calculated based on at least one of: a predefined number of CMC measurements; and a combination of a sample rate and the multipath frequency window.

Example 6 includes the system of any of Examples 1-5, wherein passed frequencies of the multipath window are predefined.

Example 7 includes the system of any of Examples 1-6, wherein the one or more processors create the detrended CMC measurements by removing at least one of: a linear trend in the CMC measurements; and a polynomial trend in the CMC measurements.

Example 8 includes the system of any of Examples 1-7, wherein the one or more processors are configured to perform the comparison by at least one of: calculating an average value of the transformed CMC measurements; and calculating a standard deviation of the transformed CMC measurements.

Example 9 includes the system of Example 8, wherein the one or more processors determine if the GNSS signal is subject to multipath based on the multipath amplitude being a predefined multiple of the standard deviation greater than the average value.

Example 10 includes the system of any of Examples 1-9, wherein when the one or more processors determine that the GNSS signal is subject to multipath, the one or more processors perform at least one of: apply a weight to the GNSS measurements; and exclude the GNSS measurements.

Example 11 includes the system of Example 10, where the one or more processors determines the weight based on the multipath amplitude.

Example 12 includes a method comprising: receiving global navigation satellite system (GNSS) measurements through one or more GNSS receivers configured to receive GNSS signals from multiple GNSS satellites; calculating code minus carrier (CMC) measurements for the GNSS measurements associated with each satellite in the multiple GNSS satellites; detrending the CMC measurements to create detrended CMC measurements; transforming the detrended CMC measurements into transformed CMC measurements, wherein the transformed CMC measurements are in the frequency domain; and determining if the GNSS measurements are affected by multipath signals based on a comparison of amplitudes of frequencies of the transformed CMC measurements against code noise amplitude.

Example 13 includes the method of Example 12, wherein determining if the GNSS measurements are affected by the multipath signals based on a comparison comprises: identifying the amplitude of the frequencies of the transformed CMC measurements within a multipath frequency window, wherein passed frequencies of the multipath frequency window are predefined.

Example 14 includes the method of Example 13, further comprising determining whether a sufficient number of CMC measurements have been calculated based on at least one of: a predefined number of CMC measurements; and a combination of sample rate and the multipath frequency window.

Example 15 includes the method of any of Examples 12-14, further comprising: receiving sensor measurements from one or more motion sensors; and determining whether the one or more GNSS receivers are associated with an object experiencing a static session based on the sensor measurements.

Example 16 includes the method of any of Examples 12-15, wherein detrending the CMC measurements comprises removing at least one of: a linear trend in the CMC measurements; and a polynomial trend in the CMC measurements.

Example 17 includes the method of any of Examples 12-16, wherein determining if the GNSS measurements are affected by the multipath signals comprises at least one of: calculating an average value of the transformed CMC measurements; and calculating a standard deviation of the transformed CMC measurements.

Example 18 includes the method of Example 17, wherein determining if the GNSS measurements are affected by the multipath signals further comprises determining if the GNSS signal is subject to multipath based on the multipath amplitude being a predefined multiple of the standard deviation greater than the average value.

Example 19 includes the method of any of Examples 12-18, wherein when it is determined that the GNSS measurements are affected by the multipath signals, further comprising at least one of: applying a weight to the GNSS measurements; and excluding the GNSS measurements.

Example 20 includes a system comprising: one or more global navigation satellite system (GNSS) receivers configured to receive GNSS signals from multiple GNSS satellites, wherein the one or more GNSS receivers provide GNSS measurements; and one or more processors configured to receive the GNSS measurements, wherein the one or more processors execute computer-readable instructions that cause the one or more processors to: determine whether the GNSS measurements are drawn to a position of an object experiencing a static session; calculate code minus carrier (CMC) measurements for the measurements associated with each satellite in the multiple GNSS satellites; remove trends in the CMC measurements to create detrended CMC measurements; transform the detrended CMC measurements into transformed CMC measurements, wherein the transformed CMC measurements are in the frequency domain; identify multipath amplitude in a multipath frequency window; determine if a GNSS signal is subject to multipath based on a comparison of the identified multipath amplitude against a code noise amplitude; and when the GNSS signal is subject to multipath, change how the GNSS measurements associated with the GNSS signal are used.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. A system comprising:

   one or more global navigation satellite system (GNSS) receivers (213) configured to receive GNSS signals from multiple GNSS satellites, wherein the one or more GNSS receivers (213) provide GNSS measurements; and
   one or more processors (205) configured to receive the GNSS measurements, wherein the one or more processors (205) execute computer-readable instructions that cause the one or more processors to:

      calculate code minus carrier (CMC) measurements for the measurements associated with each satellite in the multiple GNSS satellites;
      remove trends in the CMC measurements to create detrended CMC measurements;
      transform the detrended CMC measurements into transformed CMC measurements, wherein the transformed CMC measurements are in the frequency domain;
      identify multipath amplitude in a multipath frequency window; and

determine if a GNSS signal is subject to multipath based on a comparison of the identified multipath amplitude against a code noise amplitude.

2. The system of claim 1, wherein the execution of the computer-readable instructions further cause the one or more processors (205) to determine whether the GNSS measurements are drawn to a position of an object (101) experiencing a static session based on sensor measurements from one or more motion sensors (219).

3. The system of claim 1, wherein the execution of the computer-readable instructions further cause the one or more processors (205) to determine whether a sufficient number of CMC measurements have been calculated based on at least one of:

   a predefined number of CMC measurements; and
   a combination of a sample rate and the multipath frequency window.

4. The system of claim 1, wherein the one or more processors (205) create the detrended CMC measurements by removing at least one of:

   a linear trend in the CMC measurements; and
   a polynomial trend in the CMC measurements.

5. The system of claim 1, wherein the one or more processors (205) are configured to perform the comparison by at least one of:

   calculating an average value of the transformed CMC measurements; and
   calculating a standard deviation of the transformed CMC measurements.

6. The system of claim 5, wherein the one or more processors (205) determine if the GNSS signal is subject to multipath based on the multipath amplitude being a predefined multiple of the standard deviation greater than the average value.

7. The system of claim 1, wherein when the one or more processors (205) determine that the GNSS signal is subject to multipath, the one or more processors perform at least one of:

   apply a weight to the GNSS measurements; and
   exclude the GNSS measurements.

8. A method comprising:

   receiving global navigation satellite system (GNSS) measurements through one or more GNSS receivers (213) configured to receive GNSS signals from multiple GNSS satellites;
   calculating code minus carrier (CMC) measurements for the GNSS measurements associated with each satellite in the multiple GNSS satellites;
   detrending the CMC measurements to create detrended CMC measurements;
   transforming the detrended CMC measurements into transformed CMC measurements, wherein the transformed CMC measurements are in the frequency domain; and
   determining if the GNSS measurements are affected by multipath signals based on a comparison of amplitudes of frequencies of the transformed CMC measurements against code noise amplitude.

9. The method of claim 8, further comprising:

   receiving sensor measurements from one or more motion sensors (219); and
   determining whether the one or more GNSS receivers (213) are associated with an object (101) experiencing a static session based on the sensor measurements.

10. The method of claim 8, wherein when it is determined that the GNSS measurements are affected by the multipath signals, further comprising at least one of:

   applying a weight to the GNSS measurements; and
   excluding the GNSS measurements.

FIG. 1

EP 4 310 552 A1

FIG. 2

300

**301** Receive data related to motion of object

**303** Is object in static session — No

Yes

**305** Calculate and collect CMC measurements for a particular satellite

**307** Have a sufficient number of CMC measurements been collected — No

Yes

**309** Detrend collected CMC measurements

**311** Transform collected CMC measurements into the frequency domain

**313** Identify a largest amplitude for a frequency in a multipath frequency window

**315** Calculate statistical information for transformed CMC measurements outside the multipath frequency window

**317** Compare the identified largest amplitude in the multipath frequency window to the statistical information

**321** Use measurements for the satellite in calculations — No

**319** Is signal affected by multipath — Yes

**323** Alter use of measurements for the satellite based on the comparison in calculations

FIG. 3

15

FIG. 4A

FIG. 4B

EP 4 310 552 A1

500

Receive GNSS measurements through one or more GNSS receivers from multiple GNSS satellites — 501

Calculate CMC measurements for the GNSS measurements associated with each satellite — 503

Detrend the CMC measurements to create detrended CMC measurements — 505

Transform the detrended CMC measurements into transformed CMC measurements in the frequency domain — 507

Determine if the GNSS measurements are affected by multipath signals based on a comparison of amplitudes of frequencies against code noise amplitude — 509

FIG. 5

Europäisches
Patentamt

European
Patent Office

Office européen
des brevets

# EUROPEAN SEARCH REPORT

Application Number

EP 23 18 3683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/216210 A1 (BARTONE CHRIS G [US] ET AL) 29 September 2005 (2005-09-29) <br> * Equations (3) to (10) * <br> * paragraph [0004] – paragraph [0079] * <br> ----- | 1-10 | INV. <br> G01S19/22 <br> G01S19/37 |
| X | CN 103 901 442 A (CN ACAD SURVEYING & MAPPING) 2 July 2014 (2014-07-02) <br> * Mention equation? (Redundant with D1) * <br> * paragraph [0068] * <br> ----- | 1-10 | |
| A | CAAMANO MARIA ET AL: "Detection of GNSS Multipath with Time-Differenced Code-Minus-Carrier for Land-Based Applications", <br> 2020 EUROPEAN NAVIGATION CONFERENCE (ENC), GERMAN INSTITUTE OF NAVIGATION – DGON, <br> 23 November 2020 (2020-11-23), pages 1-12, XP033878960, <br> DOI: 10.23919/ENC48637.2020.9317340 <br> [retrieved on 2021-01-07] <br> * Equations (7) and (8) * <br> * Section 4. Test Detection and Threshold * <br> ----- | 1-10 | |

TECHNICAL FIELDS
SEARCHED       (IPC)

G01S

The present search report has been drawn up for all claims

| Place of search | Date of completion of the search | Examiner |
|---|---|---|
| Munich | 29 November 2023 | Bomart, Sébastien |

EPO FORM 1503 03.82 (P04C01)

## ANNEX TO THE EUROPEAN SEARCH REPORT
## ON EUROPEAN PATENT APPLICATION NO.

EP 23 18 3683

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2023

| Patent document cited in search report | Publication date | Patent family member(s) | Publication date |
|---|---|---|---|
| US 2005216210 A1 | 29-09-2005 | NONE | |
| CN 103901442 A | 02-07-2014 | NONE | |

EPO FORM P0459

For more details about this annex : see Official Journal of the European Patent Office, No. 12/82